(19) Europäisches Patentamt
European Patent Office
Office européen des brevets

(11) Publication number: **0 550 168 A1**

# (12) EUROPEAN PATENT APPLICATION

(21) Application number: **92311200.7**

(22) Date of filing: **09.12.92**

(51) Int. Cl.$^5$: **C08L 69/00**, C08K 3/00, //(C08L69/00,83:05)

(30) Priority: **26.12.91 JP 356847/91**

(43) Date of publication of application: **07.07.93 Bulletin 93/27**

(84) Designated Contracting States: **DE ES FR GB IT NL**

(71) Applicant: **GE PLASTICS JAPAN LIMITED**
**7-2, 3-Chome, Nihonbashi-Honcho**
**Chuo-Ku, Tokyo(JP)**

(72) Inventor: **Morioka, Masataka**
**3-147, Takase-cho**
**Moka City, Tochigi Prefecture(JP)**
Inventor: **Yamaguchi, Shinichi**
**A 303 Miyaeeru, 459-4 Hiramatsu-honcho**
**Utsunomiya City, Tochigi Prefecture(JP)**

(74) Representative: **Pratt, Richard Wilson et al**
**London Patent Operation G.E. Technical Services Co. Inc. Essex House 12/13 Essex Street**
**London WC2R 3AA (GB)**

## (54) Polycarbonate resin compositions.

(57) Resin compositions containing (A) 40-99 wt. parts polycarbonate resins, (B) 1-60 wt. parts inorganic fillers, and (C) 0.01-5.0 wt. parts, per 100 wt. parts (A) and (B) of organopolysiloxane polymers having Si-H bonds have excellent mechanical properties, with no degradation due to the inorganic fillers.

EP 0 550 168 A1

The present invention relates to polycarbonate resin compositions. Specifically, it relates to polycarbonate resin compositions reinforced with inorganic fillers.

Polycarbonate resins are widely used as engineering plastics because they have high impact resistance, are self-extinguishing when ignited, show higher heat resistance than other resins, and have excellent electrical properties and dimensional stability.

Reinforcement of polycarbonate resins by compounding them with inorganic fillers is well known. Of the various inorganic fillers, flaked materials such as mica, talc, etc. are inexpensive, and extremely useful in applications requiring a combination of stiffness and good surface appearance. However, because these flaked fillers have activated surfaces, when they are used in polycarbonate resins, they cause degradation of the polycarbonate. Consequently, the inorganic fillers used in polycarbonate resins are almost always glass (glass fibers, glass flakes, glass beads, milled glass, etc.), and the type of flaked fillers described above are rarely used.

The present invention has as its object to provide polycarbonate resin compositions which do not undergo degradation even though inorganic fillers are used in them.

As a result of extensive research into the reinforcement of polycarbonate resins, the present inventors have found that the degradation of polycarbonates using inorganic fillers can be inhibited, to give polycarbonate resins with excellent mechanical properties, by compounding the polycarbonate resins with certain silicon compounds. That discovery has led to the present invention.

The present invention thus provides resin compositions containing (A) 40-99 wt. parts polycarbonate resins and (B) 1-60 wt. parts inorganic fillers, along with (C) 0.01-5.0 wt. parts, per 100 wt. parts (A) and (B), organopolysiloxane polymers having Si-H bonds.

The polycarbonate resins (A) used in the present invention may include not only aromatic polycarbonates, but also copolyester-carbonates, etc.

Polycarbonates comprise a carbonate component and a diphenol component. The precursor from which the carbonate component is derived may be, e.g., phosgene, diphenyl carbonate, etc. Suitable diphenols include single-ring and multi-ring diphenols, which may have hetero atoms in them, and may also contain substituent groups that are nonreactive under polycarbonate production conditions and do not become reactive under the influence of electromagnetic waves. Examples include hydroquinone, resorcin, dihydroxydiphenyl ether, bis(hydroxyphenyl) alkanes, bis(hydroxyphenyl) cycloalkanes, bis(hydroxyphenyl) sulfides, bis(hydroxyphenyl) ethers, bis(hydroxyphenyl) ketones, bis(hydroxyphenyl) sulfoxides, bis(hydroxyphenyl) sulfones, and $\alpha,\alpha'$-bis(hydroxyphenyl)diisopropylbenzene, as well as ring-alkylated and ring-halogenated derivatives thereof.

Suitable diphenols include 4,4'-dihydroxydiphenyl, 2,2-bis(4-hydroxyphenyl)propane (known as bisphenol A), 2,4'-bis(4-hydroxyphenyl)-2-methylbutane, 1,1-bis(4-hydroxyphenyl)cyclohexane, $\alpha,\alpha'$-bis(4-hydroxyphenyl)-*p*-diisopropylbenzene, 2,2-bis(3-methyl-4-hydroxyphenyl)propane, 2,2-bis(3-chloro-4-hydroxyphenyl)propane, bis(3,5-dimethyl-4-hydroxyphenyl)methane, 2,2-bis(3,5-dimethyl-4-hydroxyphenyl)-propane, bis(3,5-dimethyl-4-hydroxyphenyl) sulfone, 2,4-bis(3,5-dimethyl-4-hydroxyphenyl)-2-methylbutane, 1,1-bis(3,5-dimethyl-4-hydroxyphenyl)cyclohexane, $\alpha,\alpha'$-bis(3,5-dimethyl-4-hydroxyphenyl)-*p*-diisopropylbenzene, 2,2-bis(3,5-dichloro-4-hydroxyphenyl)propane, and 2,2-bis(3,5-dibromo-4-hydroxyphenyl)propane.

Examples of particularly suitable diphenols include 2,2-bis(4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, and 1,1-bis(4-hydroxyphenyl)cyclohexane.

In addition to these monomeric diphenols, it is also possible to use oligomers or polymers having two or more terminal groups which can undergo polymerization reactions under polycarbonate synthesis conditions. Examples of such terminal groups include phenolic OH groups, chlorocarbonate ester groups, and carboxylic acid chloride groups. Examples of blocks formed from oligomers or polymers which either had such reactive groups or were post-treated to form such groups include polysiloxanes, saturated aliphatic polyesters based on hydrogenated dimer fatty acids, polycondensates of aliphatic diols with saturated aliphatic or aromatic dicarboxylic acids, aromatic polyether-sulfones, and aliphatic polyethers.

In order to obtain improved flow, it is also possible to use a minor amount, preferably 0.05-2.0 mole% (based on the number of moles of diphenols used), of compounds having three or more functional groups, preferably three or more phenolic hydroxy groups, in the known way.

Some examples of usable compounds having three or more phenolic hydroxy groups include 1,3,5-tri(4-hydroxyphenyl)benzene, 1,1,1-tri(4-hydroxyphenyl)ethane, 2,6-bis(2-hydroxy-5-methylbenzyl)-4-methylphenol, 2-(4-hydroxyphenyl)-2-(2,4-dihydroxyphenyl)-ortho-terephthalic acid ester, tetra(4-hydroxyphenyl)-propane, hexa(4-(2-(4-hydroxyphenyl)prop-2-yl)phenyl) ortho-terephthalic acid ester, tetra(4-hydroxyphenyl)-methane, and 1,4-bis(4',4''-dihydroxytriphenyl)methyl)benzene. Some other trifunctional compounds are 2,4-dihydroxybenzoic acid, trimellitic acid, cyanuric acid chloride, and 3,3-bis(4-hydroxy-3-methylphenyl)-2-oxo-2,3-dihydroindole.

Copolyester-carbonates have structural units represented by the following formula (Formula 1)

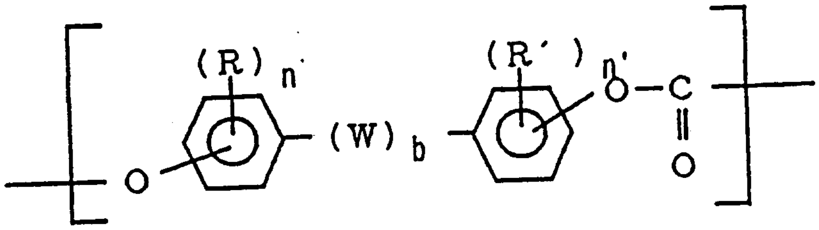

and the following formula (Formula 2),

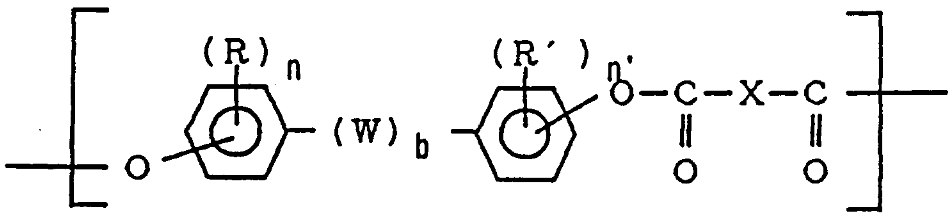

in which R and R' are each independently a halogen atom or a monovalent hydrocarbyl or hydrocarbyloxy group; W is a divalent hydrocarbylene group, -S-, -S-S-, -O-, -S(=O)-, -(O=)S(=O)-, or -C(=O)-; *n* and *n'* are each independently an integer from 0 to 4; x is a divalent aliphatic group having 6 to 18 carbons; and *b* is 0 or 1. Copolyester-carbonates in which the amount of structural units of the type in Formula 2 is 2-30 mole% of the total amount of structural units are preferred. The halogen atoms in the above formulas may be, for example, chlorine atoms, bromine atoms, etc. The mono-valent hydrocarbyl groups may be alkyl groups having 1-12 carbons, such as methyl groups, ethyl groups, propyl groups, decyl groups, etc.; cycloalkyl groups having 4-8 carbons, such as cyclopentyl groups, cyclohexyl groups, etc.; aryl groups having 6-12 carbons, such as phenyl groups, naphthyl groups, biphenyl groups, etc.; aralkyl groups having 7-14 carbons, such as benzyl groups, cinnamyl groups, etc.; or alkaryl groups having 7-14 carbons, such as tolyl groups, cumenyl groups, etc.; preferably alkyl groups. The hydrocarbyloxy groups may have one of the above groups as their hydrocarbyl portion. Such hydrocarbyloxy groups may be alkoxy groups, cycloalkoxy groups, aryloxy groups, aralkyloxy groups, or alkaryloxy groups; preferably alkoxy groups or aryloxy groups. The divalent hydrocarbylene groups W may be alkylene groups having 1-30 carbons, such as methylene groups, ethylene groups, trimethylene groups, octamethylene groups, etc.; alkylidene groups having 2-30 carbons, such as ethylidene groups, propylidene groups, etc.; cycloalkylene groups having 6-16 carbons, such as cyclohexylene groups, cyclododecylene groups, etc.; or cycloalkylidene groups such as cyclohexylidene groups, etc.

The structural units represented by the above formula Formula 2 are made up of a diphenol component and a dibasic acid component. The diphenol component may be introduced using diphenols such as those listed above. The monomer used to introduce the dibasic acid component may be a dibasic acid or derivative thereof. The dibasic acid may be, for example, an aliphatic dibasic acid having 8-20 carbons, preferably 10-12 carbons. The dibasic acid or derivative may be linear, branched, or cyclic. The aliphatic dibasic acid is preferably an $\alpha,\omega$-dicarboxylic acid. Dibasic acids of this type, such as sebacic acid (decanedioic acid), dodecanedioic acid, tetradecanedioic acid, octadecanedioic acid, eicosanedioic acid, or other linear saturated aliphatic dicarboxylic acids, are preferred. Most preferred are sebacic acid and dodecanedioic acid. The dibasic acid derivative may be, for example, the acid chloride or other acid halide of such a dibasic acid, the diphenyl ester or other aromatic ester of such a dibasic acid, etc. The number of carbons in the ester portion of the compound is not included in the number of carbons specified above for the acid. Such dibasic acids or their derivatives may be used singly or in combinations of two or more.

Copolyester-carbonates of the type described above contain structural units represented by Formula 1 and Formula 2 in the following proportions. The amount of units represented by Formula 2 is 2-30 mole%, preferably 5-25 mole%, most preferably 7-20 mole%, of the total amount of units represented by Formula 1

and Formula 2.

The weight-average molecular weight of the copolyester-carbonate is usually 10,000 to 100,000, preferably 18,000 to 40,000. The weight-average molecular weight referred to here is determined by GPC (gel permeation chromotography) using a polystyrene standard corrected for use with polycarbonates. The intrinsic viscosity, measured in methylene chloride at 25 ° C, is preferably 0.35-0.65 dL/g.

Such copolyester-carbonates can be produced by known methods of polycarbonate production, such as interfacial polymerization using phosgene, melt polymerization, etc. For example, they may be produced by the method recited by Quinn in the specification of US Patent No. 4,238,596, or the method recited by Quinn and Markezich in the specification of US Patent No. 4,238,597. Specifically, acid halides may be formed prior to reaction of the ester-forming groups with the diphenols, after which the reaction with phosgene is carried out. In Goldberg's alkaline solution method (specification of US Patent No. 3,169,121), a pyridine solution may be used, along with a dicarboxylic acid. It is also possible to use diesters (e.g., diphenyl esters) of $\alpha,\omega$-dicarboxylic acids (e.g., sebacic acid). A preferred method is the improved method recited by Kochanowski in the specification of US Patent No. 4,286,083. In that method, a lower dibasic acid such as adipic acid is first converted to it salt form (preferably the sodium or other alkali metal salt), then added to a reactor containing the diphenol. During the reaction with phosgene, the aqueous phase is kept at an alkaline pH, preferably approximately pH 8-9, which is then raised to pH 10-11 during at least the last 5% or so of the reaction with phosgene.

In the case of interfacial polymerization methods such as the bischloroformate method, it is preferable to employ the usual, well-known catalysts systems for polycarbonate or copolyester-carbonate synthesis. The main catalyst may be an amine such as a tertiary amine, amidine, or guanidine. Tertiary amines are ordinarily used, with trialkyl amines such as triethylamine being particularly preferred.

Polycarbonate resins of the type described above may be made using an endcapping agent such as phenol, *p*-tert-butylphenol, isononylphenol, isooctylphenol, *m*- or *p*-cumylphenol (preferably *p*-cumylphenol), a chromanyl compound, etc., for molecular weight control.

The inorganic filler used as component (B) in the present invention may be a flaked filler such as mica, talc, clay, etc.; a glass filler such as glass fibers, glass flakes, glass beads, milled glass, hollow glass beads, etc; and/or ceramic fibers, wollastonite, needle-shaped titanium dioxide, potassium titanate whiskers, etc. The effect of the present invention is particularly pronounced when flaked fillers such as mica, talc, clay, etc. are used. These fillers may be surface treated with silane coupling agents, titanate coupling agents, etc.

The amount of such a component (B) added is 1-60 wt. parts per 40-99 wt. parts of component (A), preferably 10-40 wt. parts per 60-90 wt. parts of component (A). If less than 1 wt. part of component (B) is added the reinforcing effect will be insufficient, whereas if more than 40 wt. parts are used, it will become difficult to process the composition by extrusion, and the appearance of articles molded from it will be impaired.

Resin compositions in accordance with the present invention also contain, as component (C), organopolysiloxane polymers having Si-H bonds. The organic groups may be lower alkyl groups such as methyl, ethyl, propyl, etc. Methyl groups are particularly preferred. They may also be a combination of two or more different alkyl groups. Examples of such compounds include alkyl hydrogen siloxane homopolymers, siloxane copolymers having mainly dialkyl siloxane units and alkyl hydrogen siloxane units, etc. Most preferred are dimethyl polysiloxanes in which part or all of the dimethyl siloxane units are replaced with methyl hydrogen siloxane units. Such compounds are commercially available, e.g., from Toshiba Silicone Ltd. under the trade name TSF 484.

The amount of component (C) used should be in the range of 0.01-5.0 wt. parts, preferably 0.05-1 wt. part, per 100 wt. parts of components (A) and (B). If the amount used is less than 0.01 wt. part, the polycarbonate degradation-inhibiting effect will be limited, while addition of more than 5.0 wt. parts merely increases the cost of the composition and so is not practical.

Depending on the intended application, other resins, various rubbers, and/or the usual additives, such as pigments, dyes, heat stabilizers, antioxidants, weatherproofing agents, lubricants, mold release agents, crystal nucleating agents, plasticizers, anti-static agents, flow promoters, flame retardants, etc., may also be added during mixing of the resins or during molding, so long as they do not impair the properties of the resin compositions in accordance with the present invention.

There is no particular restriction on the process used to produce a resin composition in accordance with the present invention. The usual methods can be satisfactorily employed, although melt kneading methods are generally preferred. Small amounts of solvents may also be used, but in general they are not necessary. The equipment used may be, for example, an extruder, Banbury mixer, roller, kneader, etc., which may operate batchwise or continuously. There is no restriction on the order of mixing of the components. For example, components (A), (B), and (C) may be fed simultaneously, or components (B) and

(C) may be premixed and optionally heat treated before component (A) is added.

## Examples

The present invention will now be described in greater detail by means of some examples, although the invention is by no means limited to the examples listed here.

The following compounds were used in these examples.

### Component (A)

PC-1: A polycarbonate (trade-named Lexan, from General Electric Co.) having Kasha Index (K.I., melt viscosity measurement as described in the specification of US Patent No. 4,465,820) 13,000 (measured at 300 °C/6 minutes)

PC-2: A polycarbonate (trade-named Lexan, from General Electric Co.) having Kasha Index 3,400 (at 300 °C/6 minutes)

### Component (B)

Mica: S-200HCT (trade name, from Kurare, Ltd.)
Talc: LMS-100 (trade name, from Tsuchiya Kaolin Co.)
Potassium titanate whiskers: HT 302 (trade name, from Titan Kogyo)
Needle-Shaped Titanium Oxide: FTL-200 (Trademark, from Ishihara Sangyo)

### Component (C)

Silicon compound: TSF 484 (trademark, from Toshiba Silicone Ltd.), poly(methyl hydrogen siloxane), in which all the dimethyl siloxane units of poly(dimethyl siloxane) have been replaced by methyl hydrogen siloxane units, with viscosity 25 cSt at 25 °C

## Examples 1-4, Comparisons 1-4

The amounts (wt. parts) of each component listed in Table 1 were mixed, fed to a 65-mm single-screw extruder set at barrel temperature 300 °C (280 °C in Examples 3-4 and Comparisons 3-4) and screw speed 100 rpm, and extruded to form pellets. The pellets were dried at 120 °C for 4 hours, then fed to an injection-molding machine operating at cylinder temperature 290 °C and mold temperature 80 °C to form test specimens, whose Izod impact strength, tensile strength, tensile elongation, flexural strength, flexural modulus, and melt index (MI) were measured. The results are listed in Table 1.

The Izod impact strength was the notched Izod impact strength measured by the ASTM D256 standard method using 1/8-inch bars. The tensile strength and tensile elongation were measured by the ASTM D638 standard method, and the flexural strength and flexural modulus were measured by the ASTM D790 standard method. The melt index was measured, both for freshly fed pellets and also after 10-minute holdup, by the ASTM D1238 standard method.

Resin compositions in accordance with the present invention have excellent mechanical properties, with no degradation of the polycarbonate resin due to the inorganic filler. They are thus industrially useful, capable of a wide range of applications.

Table 1

| | Ex. 1 | Comp. 1 | Ex. 2 | Comp. 2 | Ex. 3 | Comp. 3 | Ex. 4 | Comp. 4 |
|---|---|---|---|---|---|---|---|---|
| Components (wt. parts) | | | | | | | | |
| PC-1 | 90 | 90 | 90 | 90 | - | - | - | - |
| PC-2 | - | - | - | - | 90 | 90 | 90 | 90 |
| Mica | 10 | 10 | - | - | - | - | - | - |
| Talc | - | - | 10 | 10 | - | - | - | - |
| Potassium Titanate Whiskers | - | - | - | - | 10 | 10 | - | - |
| Needle-Shaped Titanium Oxide | - | - | - | - | - | - | 10 | 10 |
| Silicon Compound | 0.3 | - | 0.3 | - | 0.3 | - | 0.3 | - |
| Evaluation Tests | | | | | | | | |
| Izod Impact Strength (kg-cm/cm) | 11.7 | 6.7 | 9.6 | 6.2 | 12.5 | 9.3 | 9.3 | 2.8 |
| Tensile Strength ($kg/cm^2$) | 610 | 630 | 600 | 640 | - | - | - | - |
| Tensile Elongation (%) | 12 | 11 | 29 | 26 | - | - | - | - |
| Flexural Strength ($kg/cm^2$) | 980 | 1010 | 970 | 1020 | 1150 | 1080 | 1160 | 950 |
| Flexural Modulus ($kg/cm^2$) | 32100 | 32300 | 31000 | 31900 | 37200 | 33000 | 37300 | 41200 |
| MI (g/10 min) | | | | | | | | |
| Pellets | 8 | 22 | 10 | 22 | 8.0 | 9.9 | 8.8 | 9.9 |
| After 10-min Hold-up | 15 | 31 | 21 | 48 | 14 | 23 | 15 | 132 |

## Claims

1. Resin compositions containing:
   (A) 40-99 wt. parts polycarbonate resin and
   (B) 1-60 wt. parts inorganic filler , along with
   (C) 0.01-5.0 wt. parts, per 100 wt. parts (A) and (B), organopolysiloxane polymer having Si-H bonds.

European Patent Office

# EUROPEAN SEARCH REPORT

Application Number

EP 92 31 1200

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 853 882 (GENERAL ELECTRIC CO.)<br>* table 4, example 8 * | 1 | C08L69/00<br>C08K3/00<br>//<br>(C08L69/00, 83:05) |
| X | EP-A-0 053 825 (GENERAL ELECTRIC COMPANY)<br>* claim 1 * | 1 | |
| X | PATENT ABSTRACTS OF JAPAN<br>vol. 9, no. 36 (C-266)(1759) 15 February 1985<br>& JP-A-59 179 660 ( BANDOO KAGAKU KK ) 12 October 1984<br>* abstract * | 1 | |
| P,X | PATENT ABSTRACTS OF JAPAN<br>vol. 16, no. 537 (C-1003)(5580) 6 November 1992<br>& JP-A-42 02 476 ( MITSUBISHI GAS CHEM CO INC ) 23 July 1992<br>* abstract * | 1 | |
| A | DATABASE WPIL<br>Derwent Publications Ltd., London, GB;<br>AN 82-31764E (16)<br>& JP-A-57 042 764 (SUMITOMO ELEC IND KK) 10 March 1982<br>* abstract * | 1 | **TECHNICAL FIELDS SEARCHED (Int. Cl.5)**<br>C08K<br>C08L |
| A | US-A-4 224 215 (G.F. MACKE)<br>* claim 1 * | 1 | |

The present search report has been drawn up for all claims

| Place of search | Date of completion of the search | Examiner |
|---|---|---|
| THE HAGUE | 12 MAY 1993 | Kathryn Y.-P. Miao |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document